Europäisches Patentamt

(19) European Patent Office

Office européen des brevets

(11) Numéro de publication: **0 008 267**
**B1**

(12) **FASCICULE DE BREVET EUROPEEN**

(45) Date de publication du fascicule de brevet: **04.11.81**

(21) Numéro de dépôt: **79400539.7**

(22) Date de dépôt: **27.07.79**

(51) Int. Cl.³: **G 01 B 11/00, G 06 F 3/02, G 01 D 5/26**

(54) Perfectionnements aux dispositifs détecteurs opto-électroniques à fibres optiques.

(30) Priorité: **28.07.78 FR 7822493**

(43) Date de publication de la demande:
**20.02.80 Bulletin 80/4**

(45) Mention de la délivrance du brevet:
**04.11.81 Bulletin 81/44**

(84) Etats Contractants Désignés:
**DE GB IT SE**

(56) Documents cités:
**FR - A - 2 127 066**
**FR - A - 2 210 283**
**US - A - 3 173 018**
**US - A - 3 991 318**
**US - A - 4 074 142**

(73) Titulaire: **SOCIETE D'ETUDES ET APPLICATIONS TECHNIQUES S E A T**
**56, rue Elie-Sermet**
**F-11260 Esperaza (FR)**

(73) Titulaire: **SOURIAU & Cie (S.A.)**
**9/13, rue du Général Galliéni**
**F-92103 Boulogne-Billancourt (FR)**

(72) Inventeur: **Amberny, Philippe**
**F-18390 Savigny en Septaine (FR)**
Inventeur: **Ossona de Mendez, Michel**
**168, Route des Templiers**
**F-91310 Montlhery (FR)**

(74) Mandataire: **Fort, Jacques et al,**
**CABINET PLASSERAUD 84, rue d'Amsterdam**
**F-75009 Paris (FR)**

Courier Press, Leamington Spa, England.

Perfectionnements aux dispositifs détecteurs opto-électroniques à fibres optiques

La présente invention concerne les dispositifs opto-électroniques à fibres optiques, permettant de détecter la présence, la position ou le déplacement d'un organe opaque ou réfléchissant. Dans ce qui suit, les mots "fibres optiques" doivent être pris dans un sens très général, susceptible de désigner tout guide d'ondes lumineuses dans le spectre visible, infrarouge ou ultra-violet.

On connaît déjà de nombreux dispositifs opto-électroniques utilisables comme capteurs ou détecteurs, comprenant, pour chaque point de mesure, une fibre optique on un couple de fibres optiques, un émetteur de lumière et un récepteur de lumière. De tels dispositifs ont notamment été utilisés pour effectuer des détections en des points situés en ambiance hostile ou inaccessible. Ces dispositifs présentent de nombreux inconvénients: lorsque les mesures doivent être faites en un grand nombre de points, le prix est très élevé. La grande disparité des couples émetteur-récepteur oblige à faire un calibrage qui devient pénible, long et onéreux lorsque le nombre de points à surveiller est important.

L'invention vise à fournir un dispositif opto-électronique répondant mieux que ceux antérieurement connus aux exigences de la pratique, notamment en ce qu'il permet de surveiller un nombre élevé de points en ne mettant en oeuvre qu'un petit nombre d'émetteurs et de récepteurs.

Dans ce but, l'invention propose notamment un dispositif opto-électronique à fibres optiques d'amenée et de retour de lumière vers des embouts de détection ayant une répartition quelconque dans l'espace et à partir de tels embouts, caractérisé en ce que lesdites fibres sont réparties en une matrice de $m$ lignes et $n$ colonnes, chaque ligne étant associée à un transducteur-récepteur distinct et chaque colonne étant associée à un transducteur-émetteur de lumière distinct, et en ce que les émetteurs et récepteurs sont reliés à une électronique d'exploration permettant de déterminer la réponse de l'un quelconque des embouts en activant l'émetteur du couple émetteur-récepteur associé à l'embout et en analysant le signal fourni en réponse par le récepteur.

Le terme de "matrice" doit être pris ici dans son sens mathématique et non pas comme signifiant que les fibres optiques sont réparties suivant un réseau rectangulaire régulier.

Il faut par ailleurs noter que la disposition proposée est très différente des dispositions matricielles qui ont été utilisées dans le passé, par exemple pour le sondage ultra-sonore et la détection de la répartition en plan de rayonnements ionisants. Dans le premier cas, il y a un transducteur à chaque point de la matrice. Dans le second cas, il s'agit d'une répartition matricielle au sens géométrique et on trouve un espace de détection pour chaque point de la matrice, cette fois prise au sens géométrique.

L'invention limite au contraire le nombre des transducteurs à $m$ récepteurs et $n$ émetteurs, chacun des points de la matrice correspondant physiquement à une fibre optique distincte, au moins sur une partie de son trajet pour l'amenée de lumière et à une autre pour le retour.

Les mesures effectuées par le dispositif défini ci-dessus sont évidemment susceptibles d'être affectées d'un bruit de fond ou de parasites. En règle générale, chaque transducteur-récepteur comportera un circuit de filtrage et un circuit à seuil, de sorte que le sortie est binaire. La fiabilité du dispositif peut alors être augmentée considérablement, de façon simple, en répétant $p$ fois ($p$ étant un nombre entier, qui sera généralement choisi égal à 3) l'activation du détecteur et du récepteur de ceux des couples qui sont susceptibles d'être affectés par les parasites et en ne validant l'information binaire reçue qu'au cas où elle se répète les $p$ fois. Une autre solution consiste à utiliser un nombre $p$ élevé et à utiliser une logique majoritaire qui ne vaiidera l'information que si elle se répète $q$ fois, $q$ représentant une fraction élevée de $p$ (par exemple $q = 3$ et $p = 4$).

Un tel perfectionnement ajoute au dispositif opto-électronique de base suivant l'invention, qu'on peut qualifier de dispositif à multiplexage spatial (étant donné la disposition matricielle) et temporel (étant donné l'existence du balayage), une fiabilité élevée. Cette fiabilité peut encore être augmentée en disposant les fibres optiques de façon que le couple associé à deux d'entre elles fournisse des signaux de sens opposés pour être compatibles.

L'invention sera mieux comprise à la lecture de la description qui suit d'un dispositif qui en constitue un mode particulier de réalisation, donné à titre d'exemple non limitatif. La description se réfère aux dessins qui l'accompagnent, dans lesquels:

— la figure 1 est un schéma de principe du dispositif, dans lequel la séquence de sélection est commandée par microprocesseur,

— la figure 2 est un schéma de principe montrant les liaisons à fibre optique entre un capteur et les transducteurs associés.

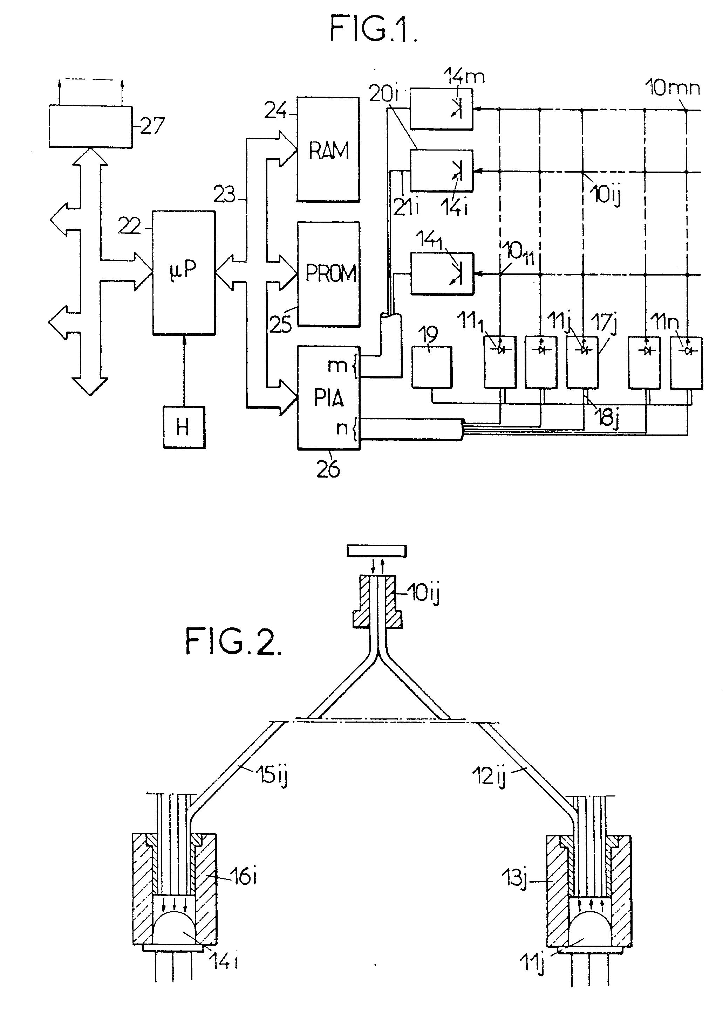

Le dispositif représenté schématiquement en figure 1 comprend au maximum $m \times n$ embouts qu'on considérera comme répartis suivant une disposition matricielle à $m$ lignes et $n$ colonnes. On désignera par $10_{ij}$ l'embout de détection appartenant à la ligne $i$ et à la colonne $j$. Certains des points de la disposition matricielle peuvent évidemment rester vides.

Les $m$ embouts d'une même colonne d'ordre $j$ sont associés à un même transducteur-émetteur $11_j$ par des fibres optiques individuelles qui sont rassemblées en faisceau à leur partie terminale, de façon à recevoir des flux lumineux aussi égaux que possible du transducteur-émetteur. Ce résultat peut être atteint en emprisonnant les parties terminales des fibres optiques telles que $12_{ij}$ dans une douille $13_j$ qui contient également le transducteur-émetteur $11_j$ (voir figure 2).

De la même façon, les $n$ embouts tels que $10_{ij}$ appartenant à la ligne $i$ sont associés à un même transducteur-récepteur $14_i$ par des fibres optiques telles que $15_i$. Les parties terminales des $n$ fibres optiques sont encore emprisonnées dans une douille $16_i$ (voir figure 2).

La nature des transducteurs-émetteurs 11 sera choisie en tenant compte de la vitesse d'exploration à obtenir. S'il suffit d'une exploration lente, on peut utiliser une lampe néon ou même une lampe à incandescence. Si au contraire l'exploration doit se fair à cadence élevée, on utilisera une diode électro-luminescente ou même une diode laser.

Chaque transducteur-émetteur appartient à un bloc émetteur. Tous ces blocs sont identiques. Le bloc $17_j$, pris comme exemple, comporte un commutateur (non représenté) qui, lorsqu'il est commandé par application d'une tension sur l'entrée $18_j$ du bloc, excite le transducteur $11_j$ en le reliant à une source 19. La commande peut s'effectuer de façon simple, par exemple à l'aide de transistors unijonction. La source peut être continue, mais on aura en général intérêt à utiliser une source modulée à une fréquence différente des fréquences d'éclairement ambiant qu'on est susceptible de rencontrer. Si l'on utilise comme transducteur une diode laser ou une diode électro-luminescente, on peut atteindre des fréquences très élevées, elles-mêmes compatibles avec des impulsions de lumière très courtes et une cadence d'exploration élevée des transducteurs.

La nature des transducteurs-récepteurs 14 sera de même choisie en fonction de la cadence d'exploration à réaliser. On pourra notamment utiliser des photo-diodes, des photo-transistors et des photo-résistances. Chaque transducteur-récepteur tel que $14_i$ est encore incorporé à un bloc récepteur. Le bloc $20_i$, par exemple, associé au transducteur 14, comporte un amplificateur de filtrage de la composante continue, également destiné à porter à un niveau suffisant le signal de sortie du transducteur; et un comparateur à seuil qui fournit, sur la sortie $21_i$, un signal à un premier niveau si l'éclairement du transducteur $14_i$ est inférieur à un seuil déterminé, à un second niveau s'il est supérieur à ce seuil.

On obtient ainsi, sur la sortie $21_i$, un signal binaire, qu'on pourra traiter aisément par circuits numériques. Il faut remarquer au passage que le bloc récepteur $20_i$ est beaucoup plus complexe et coûteux que le bloc émetteur $17_j$. En conséquence, la répartition la plus économique sera généralement suivant une matrice rectangulaire plutôt que carrée, dont le nombre $m$ de lignes sera inférieur au nombre $n$ de colonnes.

Les blocs émetteurs et récepteurs sont associés à une électronique d'exploration permettant de sélectionner l'un quelconque des couples de blocs émetteur et récepteur, en activant uniquement l'émetteur du couple et en traitant le signal de sortie du récepteur. L'activation de l'émetteur s'effectue en reliant son transducteur-émetteur à la source 19. L'activation du récepteur s'effectue en déterminant le niveau du signal qui apparaît sur sa sortie.

Dans le mode de réalisation illustré en figure 1, l'électronique comporte un microprocesseur 22 associé, par la voie de données 23, à une mémoire vive 24 et une mémoire morte programmable 25. La mémoire morte contient le programme d'exploration de la matrice ainsi éventuellement que des programmes annexes dont il sera question plus loin.

Le microprocesseur est encore associé, soit par la voie de données 23, soit par une voie d'adresses distincte, à un circuit 26 adressable de multiplexage à m + n entrées-sorties. On supposera, à titre d'exemple, que n = m = 8. On peut alors utiliser un circuit intégré classique à 16 entrées-sorties, tel que ceux commercialisés par les sociétés MOTOROLA et INTEL, compatibles avec un microprocesseur commercial tel que le Z 80 de ZILOG, le 6800 de MOTOROLA ou le 8080 de INTEL. Si on utilise un microprocesseur 6800, les mémoires vive et morte peuvent respectivement être des MCM 6810 A (MOTOROLA) et B 2716 (INTEL). Le multiplexeur 26 peut être constitué par un circuit 6821 (MOTOROLA).

Les résultats de l'exploration peuvent être présentés de diverses façons. Dans le mode de réalisation illustré en figure 1, le pré-traitement par le microprocesseur 22 se limite à la fourniture, sur 64 sorties, fournies par quatre circuits 27 de même nature que le circuit 26 (dont un seul est représenté), d'un signal binaire, chaque sortie correspondant à l'un des embouts de détection $10_{ij}$.

Une exploration plus rapide peut être obtenue en utilisant un programme stocké en mémoire morte qui effectue un balayage colonne par colonne. Si on suppose que la colonne 1 doit être balayée la première, un mot numérique envoyé au circuit 26 provoque l'activation de l'émetteur $11_1$ à partir de la source 19. Les réponses des récepteurs $14_1$ à $14_n$, constituées par des signaux électriques, sont mises sous forme numérique par les comparateurs correspondants, appliqués aux $m$ entrées de données du circuit 26 et transférées à la mémoire vive 24. Elles sont ensuite adressées individuellement par le microprocesseur. On obtient ainsi simultanément la réponse de tous les embouts d'une même colonne. On peut passer ensuite à la colonne suivante.

L'exploration peut se faire suivant une séquence beaucoup plus complexe que le simple balayage depuis l'embout $10_{11}$ jusqu'à

l'embout $10_{mn}$. En particulier:

— sur certains au moins des embouts, identifiés en mémoire morte 25, l'activation de l'émetteur et du récepteur peut être répétée. On peut par exemple les activer à trois reprises, stocker les résultats en mémoire vive 24 et vérifier la cohérence avant de commander la sortie correspondante. De façon plus générale, on peut effectuer $p$ fois l'activation et ne valider l'information binaire que si elle se répète $q$ fois.

— le programme peut également être prévu pour que la cadence d'exploration de certains embouts sout plus élevée que pour d'autres (par exemple, deux fois).

— enfin, la cohérence entre les résultats de l'exploration de deux embouts peut être constatée (quand par exemple deux embouts sont prévus pour détecter la présence d'une même pièce et travaillent, l'un par réflexion, et l'autre par transmission).

Le fonctionnement du dispositif ressortant de la description qui précède, il n'est pas nécessaire de l'indiquer de façon séparée. Mais il peut être utile de souligner que le dispositif suivant l'invention est extrêmement souple, notamment grâce à la possibilité d'y incorporer un microprocesseur. Par ailleurs, les applications possibles sont extrêmement nombreuses et variées. Le dispositif permet de localiser la position de mobiles dans l'espace par rapport à une position fixe ou par rapport à une position antérieure, de mesurer une vitesse en associant les embouts capteurs à une roue dentée ou codée, de reconnaître des zones de coefficients de réflexion différents. Les composants actifs sont placés loin des points de mesure. Les fibres optiques peuvent être elles-mêmes en plusieurs tronçons joints par connecteurs.

Il va sans dire que l'invention s'étend à de telles variantes et applications, ainsi plus généralement qu'à toutes autres restant dans le cadre des équivalences.

## Revendications

1. Dispositif opto-électronique à fibres optiques d'amenée et de retour de lumière vers des embouts de détection ayant une répartition quelconque dans l'espace et à partir de ceux-ci, caractérisé en ce que lesdites fibres sont réparties en une matrice de $m$ lignes et $n$ colonnes, chaque ligne étant associée à un transducteur-récepteur distinct (14) et chaque colonne étant associée à un transducteur-émetteur de lumière distinct (11) et en ce que les émetteurs (11) et récepteurs (14) sont reliés à une électronique d'exploration (22, 26) permettant de déterminer la réponse de l'un quelconque des embouts en activant l'émetteur du couple émetteur-récepteur associé à l'embout et en analysant le signal fourni en réponse par le récepteur.

2. Dispositif suivant la revendication 1, caractérisé en ce que chaque récepteur comporte un circuit à seuil fournissant un signal binaire de sortie.

3. Dispositif suivant la revendication 2, caractérisé en ce que l'électronique (22—26) est prévue pour répéter $p$ fois l'activation du détecteur et du récepteur d'un couple et ne valider l'information binaire reçue que si elle se répète $q$ fois ($q$ étant avantageusement égal à $p$).

4. Dispositif suivant la revendication 1, 2 ou 3, caractérisé en ce que chaque transducteur-émetteur (11) est une diode électro-luminescente ou une diode laser.

5. Dispositif suivant l'une quelconque des revendications précédentes, caractérisé en ce que chaque transducteur-émetteur (11) est relié à une source modulée et que chaque transducteur-récepteur (14) est une photo-diode, un photo-transistor ou une photorésistance associé à un amplificateur d'élimination de la composante continue du signal reçu et à un circuit à seuil.

6. Dispositif suivant l'une quelconque des revendications précédentes, caractérisé en ce que la matrice comporte un nombre $m$ de lignes inférieur au nombre $n$ de colonnes.

7. Dispositif suivant l'une quelconque des revendications précédentes, caractérisé en ce que ladite électronique comprend un multiplexeur (26) à $m + n$ entrées-sorties commandé par une unité de calcul numérique programmable.

8. Dispositif suivant l'une quelconque des revendications précédentes, caractérisé en ce que l'électronique est prévue pour analyser simultanément les signaux fournis par les $m$ transducteurs-récepteurs ($14_1$—$14_m$) en réponse à l'activation d'un même transducteur-émetteur (11).

9. Dispositif suivant l'une quelconque des revendications précédentes, caractérisé en ce qu'il comporte des embouts coopérant avec le même organe et disposés de façon à fournir des signaux qui sont opposés pour être compatibles.

10. Dispositif suivant l'une quelconque des revendications précédentes, destiné à la détection de la présence, de la position ou du déplacement d'organes réfléchissants, caractérisé en ce que chacun des embouts ($10_{ij}$) associés à un tel organe réfléchissant emprisonne côte à côte la partie terminale des fibres optiques individuelles d'amenée de lumière ($12_{ij}$) et de retour de lumière ($15_{ij}$) qui sont associées.

## Patentansprüche

1. Optoelektronische Vorrichtung mit optischen Fasern zum Heranführen und Rückfuhren von Licht in Richtung auf Detektionstüllen, die irgendeine Zwischenräume aufweisende Verteilung haben, und von diesen an, dadurch gekennzeichnet, daß diese Fasern auf einer Matrix mit "m"-Reihen und "n"-Spalten verteilt sind, wobei jede Reihe mit je einem unterschiedlichen Rezeptor-Transduktor (14) und jede Spalte mit einem unterschiedlichen Emitter-Transduktor (11) für das Licht verbunden ist und dadurch daß die Emitter (11) und Rezeptoren (14) an einer Abtastelektronik (22, 26) angeschlossen sind, welche erlaubt, die Erwiderung irgendeiner der Tüllen durch die Aktivierung des Emitters eines Emitters/Rezeptorpaares, welches dieser Tülle zugeordnet ist, und durch Analyse des Signales, welches in Antwort durch den Rezeptor geliefert wird, vorherzubestimmen.

2. Vorrichtung nach Anspruch 1, dadurch gekennzeichnet, daß jeder Rezeptor einen Schwellenkreis umfaßt, der ein binäres Ausgangssignal liefert.

3. Vorrichtung nach Anspruch 2, dadurch gekennzeichnet, daß die Elektronik (22—26) vorgesehen ist, um "p"-mal die Aktivierung des Detektors und des Rezeptors eines Paares zu wiederholen und nur dann die binäre empfangene Information anzuerkennen, wenn diese sich "q"-mal wiederholt (q ist vorteilhafterweise mit p gleich).

4. Vorrichtung nach Anspruch 1, 2 oder 3, dadurch gekennzeichnet, daß jeder Emitter-Transduktor (11) eine elektro-lumineszente Diode oder eine Laser-Diode ist.

5. Vorrichtung nach einem der vorangehenden Ansprüche, dadurch gekennzeichnet, daß jeder Emitter-Transduktor (11) mit einer Modulationsquelle verbunden ist und daß jeder Rezeptor-Transduktor (14) eine Fotodiode, ein Fototransistor oder ein Fotowiderstand ist, welcher mit einem Verstärker zur Ausschaltung der stetigen Komponente des empfangenen Signales und mit einem Schwellenkreis verbunden ist.

6. Vorrichtung nach einem der vorangehenden Ansprüche, dadurch gekennzeichnet, daß die Matrix eine Anzahl von "m"-Reihen aufweist, die niedriger als die Zahl "n" der Spalten ist.

7. Vorrichtung nach einem der vorangehenden Ansprüche, dadurch gekennzeichnet, daß die Elektronik eine Multiplexor (26) mit "m + n" Ein-/Ausgängen umfaßt, der durch eine programmierbare numerische Kalkulationseinheit betätigt wird.

8. Vorrichtung nach einem der vorangehenden Ansprüche, dadurch gekennzeichnet, daß die Elektronik zur simultanen Analyse der Signale eingerichtet ist, die durch die "m"-Rezeptor-Transduktoren $(14_1—14_m)$ in Antwort auf die Aktivierung des gleichen Emitter-Transduktors (11) geliefert werden.

9. Vorrichtung nach einem der vorangehenden Ansprüche, dadurch gekennzeichnet, daß sie Endtüllen aufweist, die mit demselben Organ zusammenwirken und derart angeordnet sind, daß sie die Signale liefern, die, um kompatibel zu sein, entgegengerichtet sind.

10. Vorrichtung nach einem der vorangehenden Ansprüche, zum Aufspüren der Anwesenheit, der Lage oder ver Verschiebung von reflektierenden Organen, dadurch gekennzeichnet, daß jede der Tüllen $(10_{ij})$ verbunden mit einem solchen reflektierenden Organ Seite an Seite die Endpartien von einzelnen optischen Fasern umschließt zum Herleiten des Lichtes $(12_{ij})$ und zum Zurückbringen des Lichtes $(15_{ij})$, die ihm zugeordnet sind.

**Claims**

1. Opto-electronic device having optical fibers for delivering and for returning light to and from detection terminals having any distribution in space, characterized in that said fibers are distributed in a matrix having $m$ lines and $n$ columns, each line being associated with a separate receiving transducer (14) and each column being associated with a separate light emitting transducer (11) and in that the emitting transducers (11) and receiving transducers (14) are connected to scanning electronic means (22, 26) for determining the response of anyone of the terminals by energizing the emitting transducer of the emitting-receiving transducer pair associated with the terminal and by analyzing the signal which is delivered by the receiving transducer in response.

2. Device according to claim 1, characterized in that each receiving transducer comprises a threshold circuit delivering a binary output signal.

3. Device according to claim 2, characterized in that the electronic means (22—26) is arranged for repeating $p$ times the energization of the detector and the receiver of a pair and for validating the received binary information only if it is repeated $q$ times ($q$ being advantageously equal to $p$).

4. Device according to claim 1, 2 or 3, characterized in that each emitting transducer (11) is a LED or a laser diode.

5. Device according to any one of the preceding claims, characterized in that each emitting transducer (11) is connected to a modulated source and in that each receiving transducer is a photodiode, a phototransistor or a photoresistor associated with an amplifier for eliminating the D.C. component of the received signal and with a threshold circuit.

6. Device according to any one of the preceding claims, characterized in that the matrix has a number $m$ of lines lower than the number $n$ of columns.

7. Device according to any one of the preceding claims, characterized in that the said electronic means comprises a multiplexer (26) having m + n input-outputs controlled by a programmable digital computing unit.

8. Device according to any one of the preceding claims, characterized in that the electronic means is arranged for simultaneously analysing the signals delivered by said $m$ receiving transducers $(14_1—14_m)$ in response to the energization of a same emitting transducer (11).

9. Device according to any one of the preceding claims, characterized in that it comprises terminals which cooperate with a same member and which are located for delivering signals which are opposed for being compatible.

10. Device according to any one of the preceding claims, for detection of the presence, location or movement of reflecting members, characterized in that each of said terminals ($10_{ij}$) associated with such a reflecting member retains in side by side location the end portion of the individual optical fibers for delivering light ($12_{ij}$) and for returning light ($15_{ij}$) which are associated thereto.

0 008 267

FIG.1.

FIG.2.